# EUROPÄISCHE PATENTSCHRIFT

(11) **EP 3 840 091 B1**
(45) Veröffentlichungstag und Bekanntmachung des Hinweises auf die Patenterteilung: **16.07.2025**
(21) Anmeldenummer: 19217698.0
(22) Anmeldetag: 18.12.2019
(51) Int. Cl.: H01M 4/583, H01M 4/80, H01M 4/133, H01M 4/587, H01M 10/052

(54) **ZELLE MIT METALLISCHER LITHIUMANODE UND HERSTELLUNGSVERFAHREN**
CELL WITH METALLIC LITHIUM ANODE AND PRODUCTION METHOD
CELLULE DOTÉE D'UNE ANODE AU LITHIUM MÉTALLIQUE ET PROCÉDÉ DE FABRICATION

(43) Veröffentlichungstag der Anmeldung: 23.06.2021
(73) Patentinhaber: VARTA Innovation GmbH, 8010 Graz (AT)
(72) Erfinder: Koller, Stefan, 8413 Ragnitz (AT)
(74) Vertreter: Ostertag & Partner Patentanwälte mbB

(56) Entgegenhaltungen:
- WO-A1-2017/086609
- US-A- 5 510 212

## Beschreibung

Die nachfolgend beschriebene Erfindung betrifft eine Zelle mit metallischer Lithiumanode und ein Verfahren zur Herstellung einer solchen Zelle.

Das bekannteste Beispiel einer Zelle mit metallischer Lithiumanode ist die Lithium-Schwefel-Zelle. Diese umfasst, wie jede andere zur Speicherung elektrischer Energie befähigte elektrochemische Zelle, als Elektroden eine Kathode und eine Anode sowie einen Separator, der zwischen der Kathode und der Anode angeordnet ist, wobei die Kathode als Aktivmaterial Schwefel und die Anode als Aktivmaterial Lithium enthält.

Während der Entladung einer Lithium-Schwefel-Zelle wird an der Anode Lithium oxidiert. An der Kathode verbindet sich das Lithium mit Schwefel, es entstehen Lithiumsulfide, bei vollständiger Entladung Dilithiumsulfid Li₂S, beispielsweise nach folgender Formel:

S₈ + 16 Li → 8 Li₂S

Während des Ladevorgangs werden entstandene Lithiumsulfide wieder aufgelöst. Dabei werden kathodenseitig Schwefel und anodenseitig Lithium gebildet, beispielsweise nach folgender Formel:

8 Li₂S → S₈ + 16 Li

Metallische Lithiumanoden lassen sich aber auch mit Kathoden kombinieren, die Lithium in ionischer Form reversibel einzulagern vermögen. beispielsweise mit Kathoden auf Basis von Lithiumkobaltoxid (LCO), Nickel-Mangan-Kobalt (NMC) oder Lithiumeisenphosphat (LFP).

Eines der Probleme, das der Marktfähigkeit von Zellen mit metallischer Lithiumanode bislang entgegensteht, resultiert daraus, dass solche Anoden bei einer vollständigen Entladung restlos abgebaut werden. Das Volumen der Anoden kann beim Entladen also gegen Null gehen. Hieraus resultieren massive Volumenänderungen innerhalb der Zelle, die sich beim Laden in umgekehrter Richtung wiederholen.

Das Problem ist insbesondere dann kritisch, wenn die Zellen einen Aufbau aufweisen, bei dem mehrere schichtförmige Anoden und Kathoden in alternierender Abfolge gestapelt vorliegen. In diesem Fall addieren sich die jeweiligen Volumenänderungen.

In der DE 102014 201836 A1 wird eine Lithium-Schwefel-Zelle beschrieben, bei der diesem Problem mit Volumenausgleichselementen begegnet wird, welche die Volumenänderungen beim Laden- und Entladen der Zelle ausgleichen sollen. Die Volumenausgleichselemente sind elastisch ausgebildet und werden zusätzlich zu den Elektroden in der Zelle verbaut. Bei Volumenänderungen innerhalb der Zelle können sie komprimiert werden oder bei Bedarf expandieren. Sie üben dabei einen kontinuierlichen Druck auf die Elektroden aus.

Nachteilhaft ist an dieser Lösung, dass die verbauten Volumenausgleichselemente aus elektrochemischer Sicht Totmaterial darstellen und die volumetrische Energiedichte einer damit ausgestatteten Zelle negativ beeinflussen. Außerdem stellt ihre Montage bei der Fertigung von Lithium-Schwefel-Zellen einen zusätzlichen Schritt dar, der bei einer hochautomatisierten Produktion eine zusätzliche Fehlerquelle darstellt.

Aus der WO 2017/086609 A1 und der US 5510212 A ist jeweils die Herstellung eines Polymers und dessen anschließende Carbonisierung bekannt. Hierbei resultieren poröse Kohlenstoffstrukturen, die Verwendung zur Herstellung von Elektroden finden können, beispielsweise für eine Lithium-Ionen-Batterie oder eine Lithium-Schwefel-Batterie.Der vorliegenden Erfindung lag die Aufgabe zugrunde, gegenüber dem Stand der Technik verbesserte Zellen mit metallischer Lithiumanode bereitzustellen.

Zur Lösung dieser Aufgabe schlägt die Erfindung die zur Speicherung von elektrischer Energie befähigte elektrochemische Zelle mit den in Anspruch 1 genannten Merkmalen sowie das Verfahren mit den in Anspruch 8 genannten Schritten vor. Weiterbildungen der Erfindung sind Gegenstand von Unteransprüchen.

Die erfindungsgemäße Zelle zeichnet sich stets durch die folgenden Merkmale aus:
a. Sie umfasst eine Kathode, die Lithiumionen reversibel aufzunehmen vermag, und
b. sie umfasst eine Anode, die metallisches Lithium als Aktivmaterial enthält, und
c. sie umfasst einen Separator, der zwischen der Kathode und der Anode angeordnet ist, wobei
d. die Anode eine poröse, elektrisch leitfähige Matrix mit offenporiger Struktur umfasst und
e. das metallische Lithium der Anode in Poren der Matrix eingelagert ist.

Weiterhin zeichnet sich die erfindungsgemäße Zelle stets durch die folgenden Merkmale aus:
f. Die Zelle umfasst als elektrischen Leiter zur elektrischen Kontaktierung der Anode eine Metallfolie und
g. die Matrix wurde durch Carbonisierung einer porösen organischen Verbindung unmittelbar auf der Metallfolie gebildet.

Die elektrisch leitfähige Matrix ist ein zentrales Merkmal der vorliegenden Erfindung. Sie gewährleistet nämlich, dass zumindest anodenseitig die beschriebenen Volumenänderungen beim Laden und Entladen der Zelle minimiert werden.

Ausgehend von einem geladenen Zustand, in dem sich das Lithium zumindest überwiegend, gegebenenfalls auch vollständig, in den Poren der Zelle befindet, wird das Lithium beim Entladen in der Anode abgebaut. Anders als bei aus dem Stand der Technik bekannten Zellen geht der Anode hierbei aber nahezu kein Volumen verloren, denn dieses wird maßgeblich durch die Matrix bestimmt. Beim Laden kann sich das Lithium, bedingt durch die elektrische Leitfähigkeit der Matrix, dann wieder gleichmäßig in der Anode abscheiden. Ungleichmäßige Lithiumabscheidungen und damit verbundene lokale Volumenzuwächse oder gar Dendritenbildung können so vermieden werden.

Bei der Kathode der erfindungsgemäßen Zelle kann es sich um eine Kathode handeln, die Schwefel als Aktivmaterial enthält. Die Zelle gemäß der Erfindung kann also eine Lithium-Schwefel-Zelle sein. Beispielsweise kann die Kathode eine Mischung aus Schwefel mit einem Zusatz zur Verbesserung der elektrischen Leitfähigkeit, beispielsweise aus der Gruppe mit Graphit, Ruß, CNT und Graphen, umfassen. Alternativ kann die Kathode den Schwefel aber auch in chemisch modifizierter Form umfassen, beispielsweise als Polysulfid.

In weiteren Ausführungsformen ist es bevorzugt, wenn die Kathode als Aktivmaterial eine Verbindung umfasst, die Lithium in ionischer Form reversibel einzulagern vermag. Beispielsweise kann die Kathode als Aktivmaterial Lithiumkobaltoxid (LCO), Schichtoxide wie Nickel-Mangan-Cobalt-Oxid (NMC), polyanionische Verbindungen wie Lithiumeisenphosphat (LFP) oder Spinellverbindungen wie Lithium-Mangan-Spinell umfassen.

Die Anode umfasst das Lithium in metallischer Form. Gegebenenfalls kann sie noch mindestens ein weiteres Material umfassen, beispielsweise mindestens ein Metall, mit dem das Lithium legiert ist. Gegebenenfalls ist das mindestens eine weitere Material gleichfalls in die Poren der Matrix eingelagert.

Der Separator trennt die Kathode und die Anode räumlich und elektrisch voneinander. Bei dem Separator handelt es sich bevorzugt um ein poröses Flächengebilde, insbesondere um eine poröse Folie oder um ein Vlies oder einen Filz oder ein textiles Gewebe. Bevorzugt ist der Separator aus einem Kunststoff gefertigt, beispielsweise aus einem Polyolefin, einem Polyimid oder aus einem Polyester.

Bevorzugt umfasst die Zelle einen flüssigen Elektrolyten, welcher aus einem Lösemittel oder Lösemittelgemisch und einem lithiumionenhaltigen Leitsalz besteht. Als Leitsalz kommen beispielsweise Lithium-bis(trifluoromethansulfonyl)imid (LiTFSI) oder Lithiumhexafluorophosphat (LiPF₆) oder Lithiumtetrafluoroborat (LiBF₄) in Frage. Als Lösemittel sind beispielsweise organische Carbonate, insbesondere Ethylencarbonat (EC), Propylencarbonat (PC), 1,2-Dimethoxyethan (DME), Ethylmethylcarbonat (EMC), Dimethylcarbonat (DMC) oder Diethylcarbonat (DEC) sowie deren Mischungen geeignet.

Wenn es sich bei der Zelle um eine Lithium-Schwefel-Zelle handelt , kann als Lösemittel beispielsweise eine Mischung aus Dioxolan (DOL) und aus DME verwendet werden. Darüber hinaus kann der Elektrolyt ein Passivierungsadditiv wie Lithiumnitrat (LiNO₃) enthalten.

Alternativ zu einer Separator/Flüssigelektrolyt-Kombination kann die Zelle allerdings auch einen polymeren Elektrolyt, eine ionische Flüssigkeit oder einen Festkörperelektrolyt aufweisen.

Bei dem polymeren Elektrolyten kann es sich insbesondere um einen Gelelektrolyten handeln, beispielsweise auf Basis von Polyvinylidenfluorid-Polyhexafluoropropylen-Copolymer (PVDF-HFP).

Ionische Flüssigkeiten (ionic liquids, ILs) sind Salze organischer Natur, welche sich durch die sterische Asymmetrie ihrer Kationen und Anionen auszeichnen, die dazu führt, dass ILs auch bei Raumtemperatur in flüssiger Phase vorliegen. ILs weisen als Kationen beispielsweise Imidazolium-, Pyridinium- oder Pyrrolidinium-Ionen und als Anion beispielsweise TFSI auf.

Bei dem Festkörperelektrolyt handelt es sich bevorzugt um einen Polymerfestkörperelektrolyten basierend auf einem Polymer-Leitsalzkomplex, der einphasig ohne jegliche Flüssigkomponente vorliegt. Als Polymermatrix kann ein Polymerfestkörperelektrolyt Polyacrylsäure (PAA), Polyethylenglycol (PEG) oder Polymethylmethacrylat (PMMA) aufweisen. In diesen können Lithium-Leitsalze wie beispielsweise LiTFSI, LiPF₆ und LiBF₄ gelöst vorliegen.

Wenn es sich bei der Zelle um eine Lithium-Schwefel-Zelle handelt, kann der Separator eine Schutzschicht aufweisen, die die Anode vor dem Elektrolyten und gegebenenfalls darin gelösten Lithiumsulfiden schützt. Diese Schutzschicht kann beispielsweise kathodenseitig auf den Separator aufgebracht sein.

Bevorzugt ist die erfindungsgemäße Zelle von einem Gehäuse umschlossen. Das Gehäuse ist bevorzugt gasdicht ausgestaltet. Das Gehäuse kann beispielsweise ein festes, eigenstabiles Gehäuse aus Metall oder Kunststoff (Hardcase) oder ein Gehäuse aus einer Folie (Pouch-Verpackung) sein.

Von großer Bedeutung für die Erfindung ist die offenporige Struktur der Matrix. Unter einer offenporigen Struktur versteht man bekanntlich eine Struktur, die eine Vielzahl von Poren aufweist, die untereinander durch Kanäle oder Durchbrechungen der Porenwände miteinander verbunden sind. In Folge dessen weisen offenporige Strukturen in aller Regel eine große innere Oberfläche auf.

Es ist bevorzugt, dass sich die Zelle durch mindestens eines der unmittelbar folgenden zusätzlichen Merkmale a. und b. auszeichnet:
a. Die Matrix weist eine Porosität im Bereich von 40 bis 95 % auf.
b. Die Poren in der Matrix zeichnen sich durch einen mittleren Durchmesser im Bereich von 2 bis 50 µm aus.

Besonders bevorzugt sind die beiden unmittelbar vorstehenden Merkmale a. und b. in Kombination miteinander realisiert.

Die Bestimmung von Porositäten (Verhältnis von Volumen der Poren / Gesamtvolumen der Matrix) und Porengrößenverteilungen ist heute keine Hürde mehr. Es gibt zahlreiche Messgeräte, die entsprechende Bestimmungen nach standardisierten Verfahren durchführen. Obige Werte beziehen sich auf Bestimmungen nach den Normen ISO 15901-1 und DIN 66133.

In möglichen Weiterbildungen des unmittelbar vorstehenden Merkmals a. weist die Matrix bevorzugt eine Porosität im Bereich von 50 % bis 95 %, besonders bevorzugt von 70 % bis 95 %, insbesondere von 80 % bis 95 %, auf.

In möglichen Weiterbildungen des unmittelbar vorstehenden Merkmals b. weisen die Poren in der Matrix bevorzugt einen mittleren Durchmesser im Bereich von 7,5 bis 150 µm, besonders bevorzugt von 9 bis 130 µm, insbesondere von 10 bis 120 µm. auf.

Die Poren in der Matrix sind besonders bevorzugt durch Durchlässe verbunden, die einen mittleren Durchmesser im Bereich von 0,5 µm und 50 µm, besonders bevorzugt im Bereich von 1 bis 40 µm, insbesondere im Bereich von 1 bis 25 µm, ganz besonders bevorzugt von 1 bis 10 µm, aufweist.

Idealerweise besteht die Matrix aus einem Material, das sich beim Laden und Entladen der Zelle chemisch nicht verändert.

In besonders bevorzugten Ausführungsformen zeichnet sich die Zelle durch mindestens eines der unmittelbar folgenden zusätzlichen Merkmale a. und b. aus:
a. Die Matrix umfasst Kohlenstoff, der durch die Carbonisierung der organischen Verbindung gebildet wurde.
b. Die Matrix umfasst den Kohlenstoff in einem Anteil im Bereich von 50 bis 100 Gew.-%.

Besonders bevorzugt sind die beiden unmittelbar vorstehenden Merkmale a. und b. in Kombination miteinander realisiert.

Besonders bevorzugte Varianten von carbonisierbaren organischen Verbindungen und auch von Verfahren zur Carbonisierung sind in der EP 2 669 260 A1 beschrieben, deren Inhalt hiermit durch Bezugnahme vollumfänglich zum Inhalt der vorliegenden Beschreibung gemacht wird.

Ganz besonders bevorzugt, geht man bei der Herstellung der porösen, elektrisch leitfähigen Matrix mit offenporiger Struktur von einer porösen organischen Verbindung, insbesondere von einem Polymer mit einer porösen Struktur, aus.

Die Bildung dieser porösen organischen Verbindung, insbesondere des Polymers mit der porösen Struktur, erfolgt bevorzugt, indem die Monomerphase einer Monomer-Wasser-Emulsion polymerisiert wird, beispielsweise durch Ringöffnungsmetathese-Polymerisation (Ring-Opening Metathesis Polymerisation, ROMP) einer hierfür zugänglichen Dienverbindung. Beim Polymerisieren werden Wassertropfen eingeschlossen. Nach einer anschließenden Entfernung des Wassers verbleiben an deren Stelle Hohlräume. Die entstandene polymere Matrix mit diesen Hohlräumen kann in einem Folgeschritt carbonisiert werden, wobei ggf. noch Zwischenschritte wie eine oxidative Behandlung (siehe unten) erforderlich sein können.

Unter Carbonisierung ist vorliegend im Übrigen eine Umwandlung einer organischen Verbindung zu nahezu reinem Kohlenstoff zu verstehen. Eine solche Umwandlung erfolgt in der Regel bei sehr hohen Temperaturen und unter Sauerstoffausschluss.

In der EP 2 669 260 A1 ist die Bildung eines ungesättigten Polymers mit einer porösen Struktur beschrieben. Als Ausgangsmaterial dient hierbei mindestens ein kohlenstoffhaltiges Monomer, bevorzugt mindestens eine mono- oder polycyclische Dienverbindung, besonders bevorzugt mindestens eine Dienverbindung ausgewählt aus der Gruppe Dicyclopentadien, Norbornen, Nobornadien, Cycloocten, Cyclooctadien und Derivaten davon. Dieses mindestens eine kohlenstoffhaltige Monomer wird in einer Monomerphase einer Monomer-Wasser-Emulsion durch Ringöffnungsmetathese-Polymerisation (Ring-Opening Metathesis Polymerisation, ROMP) zu dem gewünschten ungesättigten Polymer mit der porösen Struktur umgesetzt. Bevorzugt weist das so gebildete ungesättigte Polymer C=C-Doppelbindungen mit mindestens einem oxidierbaren Wasserstoffatom in einer a-Stellung auf.

Das gebildete ungesättigte Polymer mit der porösen Struktur wird anschließend einer chemischen und/oder physikalischen Behandlung unterworfen und danach durch thermische Behandlung karbonisiert. Aus dieser Carbonisierung resultiert dann die gewünschte elektrisch leitfähige Matrix mit der offenporigen Struktur.

Die chemische und/oder physikalische Behandlung umfasst bevorzugt eine oxidative Behandlung, insbesondere die Umsetzung des ungesättigten Polymers in einer oxidativen Atmosphäre, vorzugsweise bei Temperaturen im Bereich von 0 °C bis 250 °C. Zweck dieser Behandlung ist es, den Sauerstoffgehalt in dem Polymer vor der anschließenden Carbonisierung zu erhöhen, besonders bevorzugt auf einen Massenanteil im Bereich von 25 % bis 40 %.

Zur anschließenden Carbonisierung kann das Polymer auf eine Temperatur im Bereich von 550 °C bis 2500 °C, vorzugsweise in einer sauerstofffreien Atmosphäre, erhitzt werden.

Die Eigenschaften der Matrix, insbesondere auch ihre Porengröße, können bei dieser Herstellungsvariante im Übrigen gezielt eingestellt werden. Hierzu kann man der Monomer-in-Wasser-Emulsion unterschiedliche Mengen eines Tensids zusetzen. Bevorzugt wird der Volumenanteil des Tensids im Bereich von 0,1 % bis 8 % (basierend auf der Menge des polymerisierbaren Monomers in der Emulsion) variiert.

In einer möglichen Weiterbildung ist es bevorzugt, dass sich die Zelle durch mindestens eines der unmittelbar folgenden zusätzlichen Merkmale a. und b. auszeichnet:
a. Die Matrix enthält neben dem Kohlenstoff mindestens einen Füllstoff, der eine höhere oder eine niedrigere elektrische Leitfähigkeit als der Kohlenstoff aufweist.
b. Bei dem Füllstoff handelt es sich um mindestens ein Mitglied aus der Gruppe mit Ruß, CNT, Graphen und Metallpartikel.

Besonders bevorzugt sind die beiden unmittelbar vorstehenden Merkmale a. und b. in Kombination miteinander realisiert.

Durch den Füllstoff kann die elektrische Leitfähigkeit der Matrix gezielt erhöht oder abgesenkt werden. Zum Einbringen des Füllstoffs kann dieser beispielsweise der oben erwähnten Monomer-in-Wasser-Emulsion zugesetzt werden.

Bevorzugt umfasst die Matrix den mindestens einen Füllstoff in einem Anteil im Bereich von 0,1 bis 30 Gew.-%.

Besonders bevorzugt besteht der elektrische Leiter zur elektrischen Kontaktierung der Anode aus Nickel oder einer Nickellegierung oder Kupfer oder einer Kupferlegierung.

In einer möglichen Weiterbildung zeichnet sich die Zelle durch mindestens eines der unmittelbar folgenden zusätzlichen Merkmale a. und b. aus:
a. Die Matrix der Anode bildet eine Schicht auf dem elektrischen Leiter.
b. Die Schicht weist eine mittlere Dicke im Bereich von 5 bis 100 auf.

Besonders bevorzugt sind die beiden unmittelbar vorstehenden Merkmale a. und b. in Kombination miteinander realisiert.

Die Primärfunktion des elektrischen Leiters ist das Zu- und Ableiten von elektrischem Strom zu und von der Anode. Bevorzugt ist ein Ende des elektrischen Leiters unmittelbar mit der Anode verbunden während das andere Ende zu einem mit einem elektrischen Verbraucher koppelbaren Pol der erfindungsgemäßen erfindungsgemäßen Zelle führt.

Weiterhin dient der elektrische Leiter aber insbesondere auch als Träger für die elektrisch leitfähige Matrix. Bevorzugt bedeckt die Matrix den elektrischen Leiter derart, dass eine unmittelbare Abscheidung von Lithium auf dem Leiter ausgeschlossen ist. Dies ist im Falle einer einen flüssigen Elektrolyten enthaltenden Zelle beispielsweise dann gewährleistet, wenn die Matrix alle Oberflächen des Leiters bedeckt, die mit dem Elektrolyten in Kontakt treten könnten.

Grundsätzlich kann es sich bei dem Leiter um ein beliebiges flächiges Metallsubstrat handeln, also neben der bereits erwähnten Metallfolie auch um einen bandförmigen Metallschaum oder ein bandförmiges metallisches Vlies. Die erwähnte Folie ist allerdings bevorzugt, insbesondere wenn sie als rechteckiges Substrat oder bandförmig vorliegt.

Die Aussage, dass die Matrix in bevorzugten Formen als Schicht ausgebildet ist, impliziert bereits, dass die Anode der erfindungsgemäßen Lithium-Schwefel-Zelle insgesamt bevorzugt gleichfalls als Schicht ausgebildet ist. Entsprechend sind in bevorzugten Ausführungsformen auch die Kathode und der Separator als Schichten ausgebildet.

Bevorzugt sind die Anode, die Kathode und der Separator miteinander zu einem Verbundkörper mit der Sequenz positive Elektrode / Separator / negative Elektrode kombiniert. Im Falle bandförmiger Elektroden und Separatoren liegt der Verbundkörper bevorzugt in Form eines Wickels vor. Häufig werden aber auch mehrere Verbundkörper aufeinander gestapelt.

Bevorzugt liegt die Kathode als Schicht mit einer Dicke im Bereich von 10 µm bis 200 µm vor.

Insbesondere wenn es sich bei der erfindungsgemäßen Zelle um eine Lithium-Schwefel-Zelle handelt, zeichnet sich die Zelle bevorzugt durch mindestens eines der unmittelbar folgenden zusätzlichen Merkmale a. und b. aus:
a. Die Kathode umfasst eine poröse, elektrisch leitfähige Matrix mit offenporiger Struktur, und
b. in diese Matrix ist Schwefel eingelagert.

Besonders bevorzugt sind die beiden unmittelbar vorstehenden Merkmale a. und b. in Kombination miteinander realisiert.

Die kathodenseitig eingesetzte Matrix mit der offenporigen Struktur weist bevorzugt die gleiche Beschaffenheit und Struktur wie die anodenseitig zum Einsatz kommende Matrix auf.

Unabhängig vom gewählten Aktivmaterial ist es bevorzugt, dass der Aufbau der Kathode dem strukturellen Aufbau der Anode ähnelt. So ist es in bevorzugten Weiterbildungen möglich, dass sich die Zelle durch mindestens eines der unmittelbar folgenden zusätzlichen Merkmale a. bis c. auszeichnet:
a. Die Kathode umfasst einen elektrischen Leiter zur elektrischen Kontaktierung des Aktivmaterials der Kathode.
b. Der elektrische Leiter ist eine Metallfolie.
c. Die Matrix der Kathode bildet eine Schicht auf dem metallischen Leiter.

Besonders bevorzugt sind die beiden unmittelbar vorstehenden Merkmale a. und b. in Kombination miteinander realisiert. Wenn es sich bei der erfindungsgemäßen Zelle um eine Lithium-Schwefel-Zelle handelt, so sind bevorzugt alle unmittelbar vorstehenden Merkmale a. bis c. in Kombination miteinander realisiert.

Die beschriebene Zelle lässt sich mit Hilfe des nachstehend beschriebenen Verfahrens herstellen, das ebenfalls Gegenstand der vorliegenden Erfindung ist. Dieses umfasst stets die unmittelbar folgenden Schritte a. bis c.:
a. Bereitstellung einer porösen, elektrisch leitfähigen Matrix, und
b. Einlagern von Lithium in Poren der Matrix zwecks Bildung einer Anode, die das Lithium als Aktivmaterial enthält, und
c. Kombinieren der gebildeten Anode mit einem Separator und einer Kathode, die Schwefel als Aktivmaterial enthält.

Die drei Schritte müssen nicht zwingend in der angegebenen Reihenfolge durchgeführt werden. So kann Schritt b. durchaus auch erst nach Schritt c. durchgeführt werden.

Weiterhin umfasst das erfindungsgemäße Verfahren stets die folgenden Schritte:
d. Zur Bereitstellung der porösen, elektrisch leitfähigen Matrix wird auf einem Träger eine Schicht aus der zu carbonisierenden porösen organischen Verbindung gebildet wird und
e. als Träger wird eine Metallfolie verwendet und
f. die poröse organische Verbindung wird auf dem Träger carbonisiert.

Es ist bevorzugt, dass sich das Verfahren durch den unmittelbar folgenden zusätzlichen Schritt a. auszeichnet:
a. Die Carbonisierung erfolgt unter Ausschluss von Sauerstoff.

Auf die Eigenschaften der Matrix sowie insbesondere auch auf bevorzugte Formen ihrer Herstellung, auch die Carbonisierung, wurde bereits eingegangen. In der EP 2 669 260 A1 finden sich hierzu detaillierte Ausführungsbeispiele.

Insbesondere wurden vorstehend auch schon Beispiele organischer Verbindungen genannt, die zu der porösen organischen Verbindung verarbeitet werden können, die über den nachfolgenden Carbonisierungsschritt zu der porösen Matrix führen.

Es ist also erfindungsgemäß, zunächst auf dem Träger die Schicht aus der porösen organischen Verbindung zu bilden. Hierzu kann beispielsweise die oben beschriebene Monomer-in-Wasser-Emulsion einer Dienverbindung auf den Träger aufgetragen werden. Durch Metathese der Dienverbindung wird die poröse organische Verbindung erhalten, die der gleichfalls bereits beschriebenen oxidativen Behandlung unterzogen wird. Anschließend kann die poröse organische Verbindung gemeinsam mit dem Träger einer Temperatur ausgesetzt werden, bei der die Carbonisierung eintritt und die poröse Matrix erhalten wird.

In besonders bevorzugten Ausführungsformen zeichnet sich das Verfahren durch den unmittelbar folgenden zusätzlichen Schritt a., besonders bevorzugt durch eine Kombination der zwei unmittelbar folgenden Schritte a. und b., aus:
a. Das metallische Lithium wird mittels elektrochemischer Abscheidung in die Poren der Matrix eingebracht.
b. Das metallische Lithium wird in die Poren der Matrix eingebracht, bevor die Anode mit dem Separator und der Kathode kombiniert wird.

Das Einbringen des Lithiums in die Poren der Matrix kann beispielsweise erfolgen, indem die Matrix in eine Lithiumsalzlösung getaucht und mit dem negativen Pol einer Gleichspannungsquelle verbunden wird.

In weiteren besonders bevorzugten Ausführungsformen zeichnet sich das Verfahren durch den unmittelbar folgenden zusätzlichen Schritt a., besonders bevorzugt durch eine Kombination der zwei unmittelbar folgenden Schritte a. und b., aus:
a. Das metallische Lithium wird mittels elektrochemischer Abscheidung in die Poren der Matrix eingebracht.
b. Das metallische Lithium wird in die Poren der Matrix eingebracht, nachdem die Anode mit dem Separator und der Kathode kombiniert wird.

Bei dieser Variante kann kathodenseitig beispielsweise ein Lithiumionen-haltiges NMC-Material eingesetzt werden. Die elektrochemische Abscheidung des metallischen Lithiums in den Poren der Matrix erfolgt dann beim ersten Laden.

Es ist auch möglich, die Matrix mit metallischem Lithium teilweise zu beladen, die teilweise beladene Matrix mit der Kathode und dem Separator zu kombinieren und beim ersten Laden die Matrix vollständig zu beladen. Auf diese Weise ist es möglich, einen Überschuss an Lithium in die Zelle einzubringen um Verluste bei den ersten Lade- und Entladezyklen auszugleichen.

Wenn es sich bei der erfindungsgemäßen Zelle um eine Lithium-Schwefel-Zelle handelt, ist es in einigen bevorzugten Ausführungsformen auch möglich, die Kathode mit Lithiumsulfiden zu beladen und mit einem Separator und einer auf dem beschriebenen elektrischen Leiter angeordneten gleichfalls bereits beschriebenen porösen und elektrisch leitenden Matrix zu einer Zelle zu verschalten. Beim Anlegen einer Ladespannung an die Zelle löst sich das Lithiumsulfid auf und die Matrix wird mit Lithium aus der Kathode befüllt.

Weitere Merkmale der Erfindungsowie aus der Erfindung resultierende Vorteile ergeben sich aus den nachfolgenden Ausführungsbeispielen sowie den Zeichnungen, anhand derer die Erfindung erläutert wird. Die nachfolgend beschriebene Ausführungsform dient lediglich zur Erläuterung und zum besseren Verständnis der Erfindung und ist in keiner Weise einschränkend zu verstehen.

### Ausführungsbeispiel

(1) 8,00 mL (60 mmol) Dicyclopentadien (Sigma-Aldrich) und 0,084 mL (1,9*10⁻² mmol) des Tensid Pluronic^{®} 121 (Poly(ethylenglykol)-Blockpoly(propylenglykol)-Blockpoly(ethylenglykol); Mₙ = 4400 g/mol; Sigma-Aldrich) wurden in einem Reaktionsgefäß vorgelegt. Die Mischung der beiden Komponenten wurde bei 400 U/min gerührt. 33 ml deionisiertes Wasser wurden unter ständigem Rühren tropfenweise zugegeben. Nach Zugabe des Wassers wurde die Mischung für eine weitere Stunde gerührt, bis eine gleichmäßige Emulsion vorlag. Zum Abschluss des Rührvorgangs wurde der Emulsion ein in 1 ml Toluol gelöster Initiator (8 mg (8,4*10⁻³ mmol) N,N-bis(me-sityl)-4,5-dihydroimidazol-2-yl; Sigma-Aldrich) zugesetzt.
(2) Die aus Schritt (1) resultierende Emulsion wurde in einer Schichtstärke von 100 µm auf eine 12 µm dicke Kupferfolie aufgetragen. Die entstandene Schicht wurde dann mit der Kupferfolie auf 80 °C erwärmt. Nach 4 Stunden Aushärtung wurde eine weiße und mechanisch stabile Schicht erhalten. Diese wurde mehrfach mit Dichlormethan und Aceton gespült und im Vakuum getrocknet.
(3) Die aus Schritt (2) resultierende Schicht wurde für vier Wochen bei Raumtemperatur Luftsauerstoff ausgesetzt. Der Sauerstoffanteil in der Schicht betrug nach Abschluss der 4 Wochen 31,54 % (bestimmt durch Elementaranalyse).
(4) In einem Folgeschritt wurde die Kupferfolie mit der Schicht für 2 Stunden in einer Argonatmosphäre einer Temperatur von 900 °C ausgesetzt. Dabei carbonisierte die Schicht.
(5) Aus der mit der carbonisierten Schicht beschichteten Kupferfolie wurde ein 1,13 cm² großen Teilstück ausgeschnitten und als negative Elektrode in eine Swagelok-Zelle verbaut und bei einer C-Laderate von 0,1 und einer C-Entladerate von 0,1 zyklisiert. Beim ersten Laden kam es zu einer Abscheidung metallischen Lithiums in Poren der Anode
Als positive Elektrode kann hierbei eine NMC-Kathode (Aktivmaterial Lithiumnickelmangancobaltoxid (LiNi_{0,33}Mn_{0,33}Co_{0,33}O₂)) zum Einsatz, als Elektrolyt eine Mischung aus EC und EMC (Volumenverhältnis 3:7) mit einem Zusatz von 2 Vol.-% Vinylencarbonat (VC) und 1M LiPF₆. As Separator wurde ein handelsüblicher Polyolefinseparator verwendet.

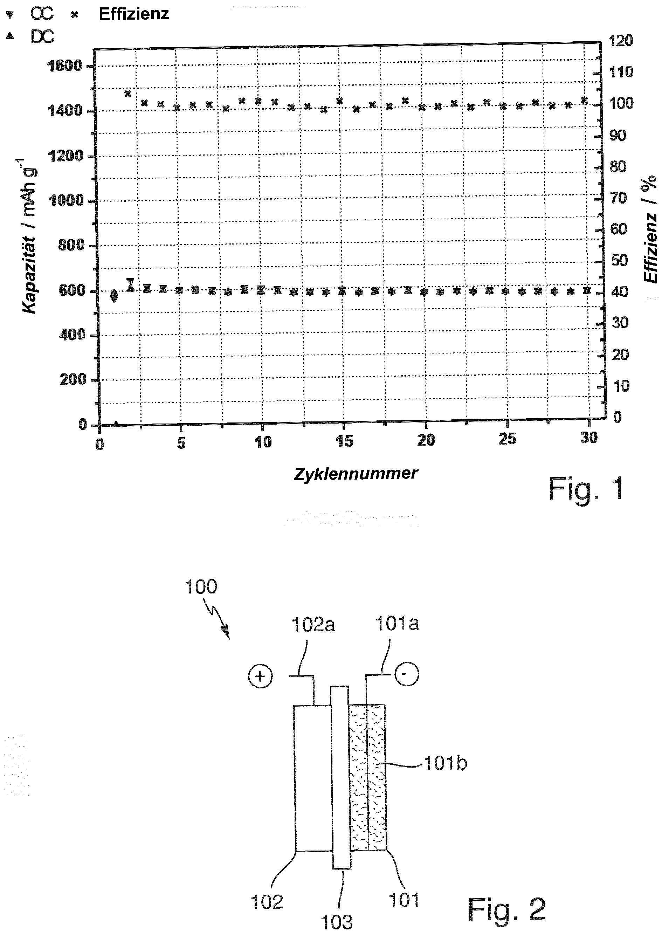

Die Zyklisierungsergebnisse sind in Figur 1 dargestellt. Wie gut zu erkennen ist, wurde im Verlauf der Zyklisierungsuntersuchungen nahezu keine Kapazitätsabnahme beobachtet.

In Figur 2 ist eine Ausführungsform einer erfindungsgemäße Zelle 100 schematisch dargestellt. Diese umfasst die Anode 101, die Kathode 102 und den Separator 103. Die Zelle 100 umfasst einen elektrischen Leiter 101a zur elektrischen Kontaktierung der Anode 101 und einen elektrischen Leiter 102a zur elektrischen Kontaktierung der Kathode 102. Sowohl bei dem elektrischen Leiter 101a als auch bei dem elektrischen Leiter 102a handelt es sich um eine Metallfolie. Die Anode 101 umfasst eine poröse, elektrisch leitfähige Matrix 101b mit offenporiger Struktur, in deren Poren Lithium eingelagert ist.

## Patentansprüche

1. Elektrochemische Zelle mit den Merkmalen
a. sie umfasst eine Kathode, die Lithiumionen reversibel aufzunehmen vermag, und
b. sie umfasst eine Anode, die metallisches Lithium als Aktivmaterial enthält, und
c. sie umfasst einen Separator, der zwischen der Kathode und der Anode angeordnet ist, wobei
d. die Anode eine poröse, elektrisch leitfähige Matrix mit offenporiger Struktur umfasst und
e. das metallische Lithium der Anode in Poren der Matrix eingelagert ist und
f. die Zelle als elektrischen Leiter zur elektrischen Kontaktierung der Anode eine Metallfolie umfasst und
g. die Matrix durch Carbonisierung einer porösen organischen Verbindung unmittelbar auf der Metallfolie gebildet wurde.

2. Zelle nach Anspruch 1 mit mindestens einem der folgenden zusätzlichen Merkmale:
a. Die Matrix weist eine Porosität im Bereich von 40 bis 95 % auf.
b. Die Poren in der Matrix zeichnen sich durch einen mittleren Durchmesser im Bereich von 2 bis 50 µm aus.

3. Zelle nach einem der Ansprüche 1 oder 2 mit mindestens einem der folgenden zusätzlichen Merkmale:
a. Die Matrix umfasst Kohlenstoff, der durch die Carbonisierung der organischen Verbindung gebildet wurde.
b. Die Matrix umfasst den Kohlenstoff in einem Anteil im Bereich von 50 bis 100 Gew.-%.

4. Zelle nach Anspruch 3 mit mindestens einem der folgenden zusätzlichen Merkmale:
a. Die Matrix enthält neben dem Kohlenstoff mindestens einen Füllstoff, der eine höhere oder eine niedrigere elektrische Leitfähigkeit als der Kohlenstoff aufweist.
b. Bei dem Füllstoff handelt es sich um mindestens ein Mitglied aus der Gruppe mit Ruß, CNT, Graphen und Metallpartikel.

5. Zelle nach einem der vorhergehenden Ansprüche mit mindesten einem der folgenden weiteren Merkmale:
a. Die Matrix der Anode bildet eine Schicht auf dem elektrischen Leiter.
b. Die Schicht weist eine mittlere Dicke im Bereich von 5 bis 100 auf.

6. Zelle nach einem der vorhergehenden Ansprüche mit den folgenden zusätzlichen Merkmalen:
a. Die Kathode umfasst eine poröse, elektrisch leitfähige Matrix mit offenporiger Struktur, und
b. in diese Matrix ist Schwefel eingelagert.

7. Zelle nach Anspruch 6 mit den folgenden zusätzlichen Merkmalen:
a. Die Kathode umfasst einen elektrischen Leiter zur elektrischen Kontaktierung des Aktivmaterials der Kathode.
b. Der elektrische Leiter ist eine Metallfolie.
c. Die Matrix der Kathode bildet eine Schicht auf dem metallischen Leiter.

8. Verfahren zur Herstellung einer elektrochemischen Zelle, insbesondere mit den Merkmalen eines der vorherigen Ansprüche, mit den folgenden Schritten:
a. Bereitstellung einer porösen, elektrisch leitfähigen Matrix, und
b. Einlagern von Lithium in Poren der Matrix zwecks Bildung einer Anode, die das Lithium als Aktivmaterial enthält, und
c. Kombinieren der gebildeten Anode mit einem Separator und einer Kathode, die Schwefel als Aktivmaterial enthält,
**dadurch gekennzeichnet, dass** zur Bereitstellung der elektrisch leitfähigen Matrix
d. auf einem Träger eine Schicht aus der zu carbonisierenden porösen organischen Verbindung gebildet wird und
e. als Träger eine Metallfolie verwendet wird und
f. die poröse organische Verbindung auf dem Träger carbonisiert wird.

9. Verfahren nach Anspruch 8 mit den folgenden zusätzlichen Schritten:
a. Die Carbonisierung erfolgt unter Ausschluss von Sauerstoff.

10. Verfahren nach einem der Ansprüche 8 oder 9 mit einem der folgenden zusätzlichen Schritte:
a. Das metallische Lithium wird mittels elektrochemischer Abscheidung in die Poren der Matrix eingebracht.
b. Das metallische Lithium wird in die Poren der Matrix eingebracht, bevor die Anode mit dem Separator und der Kathode kombiniert wird.

11. Verfahren nach einem der Ansprüche 8 bis 10 mit einem der folgenden zusätzlichen Schritte:
a. Das metallische Lithium wird mittels elektrochemischer Abscheidung in die Poren der Matrix eingebracht.
b. Das metallische Lithium wird in die Poren der Matrix eingebracht, nachdem die Anode mit dem Separator und der Kathode kombiniert wird.

## Claims

1. Electrochemical cell having the features that
a. it comprises a cathode capable of reversibly accommodating lithium ions and
b. it comprises an anode containing metallic lithium as active material and
c. it comprises a separator arranged between the cathode and the anode,
wherein
d. the anode comprises a porous, electrically conductive matrix having an open-pored structure and
e. the metallic lithium of the anode is incorporated in pores of the matrix and
f. the cell comprises a metal foil as an electrical conductor for making electrical contact with the anode and
g. the matrix was formed directly on the metal foil by carbonization of a porous organic compound.

2. Cell according to Claim 1 having at least one of the following additional features:
a. the matrix has a porosity in the range from 40% to 95%;
b. the pores in the matrix are **characterized by** an average diameter in the range from 2 to 50 µm.

3. Cell according to either of Claims 1 or 2 having at least one of the following additional features:
a. the matrix comprises carbon formed by carbonization of the organic compound;
b. the matrix comprises the carbon in a proportion in the range from 50% to 100% by weight.

4. Cell according to Claim 3 having at least one of the following additional features:
a. in addition to the carbon the matrix contains at least one filler having a higher or a lower electrical conductivity than the carbon;
b. the filler is at least one member of the group comprising carbon black, CNT, graphene and metal particles.

5. Cell according to any of the preceding claims having at least one of the following further features:
a. the matrix of the anode forms a layer on the electrical conductor;
b. the layer has an average thickness in the range from 5 to 100.

6. Cell according to any of the preceding claims having the following additional features:
a. the cathode comprises a porous, electrically conductive matrix having an open-pored structure and
b. sulfur is incorporated in this matrix.

7. Cell according to Claim 6 having the following additional features:
a. the cathode comprises an electrical conductor for making electrical contact with the active material of the cathode;
b. the electrical conductor is a metal foil;
c. the matrix of the cathode forms a layer on the metallic conductor.

8. Process for producing an electrochemical cell, in particular having the features of any of the preceding claims, comprising the steps of:
a. providing a porous, electrically conductive matrix and
b. incorporating lithium in pores of the matrix to form an anode containing the lithium as active material and
c. combining the anode formed with a separator and a cathode containing sulfur as active material, **characterized in that** to provide the electrically conductive matrix
d. a layer of the porous organic compound to be carbonized is formed on a carrier and
e. a metal foil is used as the carrier and
f. the porous organic compound is carbonized on the carrier.

9. Process according to Claim 8 comprising the following additional steps:
a. the carbonization is carried out in the absence of oxygen.

10. Process according to either of Claims 8 or 9 comprising either of the following additional steps:
a. the metallic lithium is introduced into the pores of the matrix by electrochemical deposition;
b. the metallic lithium is introduced into the pores of the matrix before the anode is combined with the separator and the cathode.

11. Process according to any of Claims 8 to 10 comprising either of the following additional steps:
a. the metallic lithium is introduced into the pores of the matrix by electrochemical deposition;
b. the metallic lithium is introduced into the pores of the matrix after the anode is combined with the separator and the cathode.

## Revendications

1. Cellule électrochimique présentant les caractéristiques suivantes
a. elle comprend une cathode apte à absorber de manière réversible des ions lithium, et
b. elle comprend une anode contenant du lithium métallique comme matériau actif, et
c. elle comprend un séparateur agencé entre la cathode et l'anode,
dans laquelle
d. l'anode comprend une matrice poreuse électriquement conductrice à structure à pores ouverts, et
e. le lithium métallique de l'anode est stocké dans les pores de la matrice, et
f. la cellule comprend une feuille métallique comme conducteur électrique pour la mise en contact électrique de l'anode, et
g. la matrice a été formée par carbonisation d'un composé organique poreux directement sur la feuille métallique.

2. Cellule selon la revendication 1, présentant au moins l'une des caractéristiques supplémentaires suivantes :
a. la matrice présente une porosité comprise entre 40% et 95%,
b. les pores de la matrice se caractérisent par un diamètre moyen compris entre 2µm et 50µm.

3. Cellule selon l'une des revendications 1 ou 2, présentant au moins l'une des caractéristiques supplémentaires suivantes :
a. la matrice comprend du carbone formé par la carbonisation du composé organique,
b. la matrice comprend le carbone dans une proportion comprise entre 50 et 100% en poids.

4. Cellule selon la revendication 3, présentant au moins l'une des caractéristiques supplémentaires suivantes :
a. la matrice contient, outre le carbone, au moins une charge qui présente une conductivité électrique supérieure ou inférieure à celle du carbone,
b. la charge est au moins un élément du groupe comprenant le noir de carbone, les CNT (nanotubes de carbone), le graphène et les particules métalliques.

5. Cellule selon l'une des revendications précédentes, présentant au moins l'une des caractéristiques supplémentaires suivantes :
a. la matrice de l'anode forme une couche sur le conducteur électrique,
b. la couche présente une épaisseur moyenne comprise entre 5 et 100.

6. Cellule selon l'une des revendications précédentes, présentant les caractéristiques supplémentaires suivantes :
a. la cathode comprend une matrice poreuse, électriquement conductrice, à structure à pores ouverts, et
b. du soufre est incorporé dans cette matrice.

7. Cellule selon la revendication 6, présentant les caractéristiques supplémentaires suivantes :
a. la cathode comprend un conducteur électrique pour la mise en contact électrique du matériau actif de la cathode,
b. le conducteur électrique est une feuille métallique,
c. la matrice de la cathode forme une couche sur le conducteur métallique.

8. Procédé de fabrication d'une cellule électrochimique, en particulier présentant les caractéristiques de l'une des revendications précédentes, comprenant les étapes suivantes :
a. préparation d'une matrice poreuse électriquement conductrice, et
b. incorporation de lithium dans les pores de la matrice afin de former une anode qui contient le lithium comme matériau actif, et
c. combinaison de l'anode formée avec un séparateur et une cathode contenant du soufre comme matériau actif, **caractérisé en ce que**, pour préparer la matrice électriquement conductrice,
d. une couche du composé organique poreux à carboniser est formée sur un support, et
e. une feuille métallique est utilisée comme support, et
f. le composé organique poreux est carbonisé sur le support.

9. Procédé selon la revendication 8, comprenant les étapes supplémentaires suivantes :
a. la carbonisation s'effectue en l'absence d'oxygène.

10. Procédé selon l'une des revendications 8 ou 9, comprenant l'une des étapes supplémentaires suivantes :
a. le lithium métallique est introduit dans les pores de la matrice par dépôt électrochimique,
b. le lithium métallique est introduit dans les pores de la matrice avant que l'anode ne soit combinée avec le séparateur et la cathode.

11. Procédé selon l'une des revendications 8 à 10, comprenant l'une des étapes supplémentaires suivantes :
a. le lithium métallique est introduit dans les pores de la matrice par dépôt électrochimique,
b. le lithium métallique est introduit dans les pores de la matrice après que l'anode a été combinée avec le séparateur et la cathode.
